# EUROPEAN PATENT SPECIFICATION

(11) **EP 2 244 328 B1**
(45) Date of publication and mention of the grant of the patent: **01.02.2012**
(21) Application number: 10160494.0
(22) Date of filing: 20.04.2010
(51) Int. Cl.: H01M 10/04, H01M 10/0587, H01M 2/26, H01M 2/22, H01M 4/70

(54) **Rechargeable battery having a current collecting plate**
Akku mit Stromsammelplatte
Batterie rechargeable dotée d'une plaque de collecte de courant

(30) Priority: 21.04.2009 KR 20090034674
(43) Date of publication of application: 27.10.2010
(73) Proprietor: SB LiMotive Co., Ltd., Suwon-si Gyeonggi-do (KR)
(72) Inventor: Byun, Sang-Won, Gyeonggi-do (KR); Ahn, Byung-Kyu, Gyeonggi-do (KR)
(74) Representative: Gulde Hengelhaupt Ziebig & Schneider

(56) References cited:
- EP-A2- 1 137 080
- JP-A- 2004 207 089
- JP-A- 2005 267 945
- JP-A- 2007 122 942
- US-A1- 2004 191 612
- US-A1- 2004 237 290
- US-A1- 2005 221 178
- US-A1- 2005 287 429
- US-A1- 2006 063 068
- US-A1- 2006 068 277
- US-A1- 2007 009 792
- US-A1- 2007 009 793
- US-A1- 2007 117 009

## Description

### BACKGROUND OF THE INVENTION

### 1. Field

The described technology relates to a rechargeable battery. More particularly, it relates to a rechargeable battery having a current collecting plate.

### 2. Description of the Related Art

The rechargeable battery is a battery that can be charged and discharged, unlike a primary battery, which is not intended to be recharged. Low-capacity rechargeable batteries have been used for portable small electronic devices, such as mobile phones, laptops computers, and camcorders. Large-capacity batteries have been widely used as power supplies for driving motors, such as a motor for a hybrid car, etc.

Recently, a high power rechargeable battery using a non-aqueous electrolyte having a high energy density has been developed. The high power rechargeable battery is a large-capacity rechargeable battery that includes a plurality of rechargeable batteries connected in series. The high power rechargeable battery may be used in devices requiring a large amount of power, for example, for driving a motor, such as a motor for an electric vehicle, etc.

Further, a large-capacity battery module usually includes a plurality of rechargeable batteries connected in series, wherein the rechargeable battery may be formed in a cylindrical shape, a square shape, etc.

A prismatic-shaped rechargeable battery generally includes an electrode assembly having a positive electrode, a negative electrode, and a separator interposed therebetween. It also may include a case having a space for incorporating the electrode assembly, a cap plate that seals the case and has a terminal hole through which an electrode terminal is inserted. The electrode terminal is electrically connected with the electrode assembly and inserted into the terminal hole to protrude outside of the case.

In a conventional prismatic-shaped rechargeable battery, a lead tab that electrically connects an electrode assembly and a terminal is fixed to a side surface of an uncoated region of the electrode assembly by ultrasonic welding. However, when the lead tab is welded to the entire side surface of the uncoated region of the electrode assembly, the volume of the electrode assembly is unnecessarily increased.

In addition, to allow for ultrasonic welding, the lead tab is generally thin to transmit ultrasonic waves to the uncoated region. However, when the lead tab is thin, its resistance is increased, thereby causing heat generation and output deterioration.

Also, when the rechargeable battery is impacted, contact deterioration may occur between the lead tab and the electrode assembly, which causes internal heat generation and decrease of output.

Furthermore, when the lead tab is welded to a side end of the uncoated region, it may not be stably welded to the uncoated region because the uncoated region is too thin. Particularly, the uncoated region of a lithium ion battery is often thin and weak, making it difficult to adhere and weld the lead tab and the uncoated region.

US 2004/0191612 A1, US 2007/0117009 A1, US 2006/0063068 A1 and US 2006/0068277 A1 all refer to rechargeable batteries including a wound up electrode assembly with a positive electrode, a negative electrode and a separator interposed between these electrodes. Current collecting plates are electrically connecting the electrodes and terminals of the batteries. The current collecting plates are connected to the electrodes on at least a curved end section of side surfaces of the electrode assemblies.

### SUMMARY OF THE INVENTION

According to the present invention there is provided a rechargeable battery comprising:
an electrode assembly including a positive electrode, a negative electrode and a separator interposed between these electrodes, the electrodes and the separator being wound around each other thereby forming longitudinal sides having flat portions and curved portions,
wherein the positive electrode includes an uncoated region at one end of the positive electrode and the positive electrode is being arranged in the electrode assembly such that at least the uncoated region protrudes from one short side of the electrode assembly thereby defining one side surface of the electrode assembly having two curved end sections settled on opposite sides of the side surface, and
the negative electrode includes an uncoated region at one end of the negative electrode opposite the uncoated region of the positive electrode and the negative electrode is being arranged in the electrode assembly such that at least the uncoated region protrudes from the other short side of the electrode assembly thereby defining the other side surface of the electrode assembly having two curved end sections settled on opposite sides of the side surface;
a case containing the electrode assembly;
a cap plate coupled to the case;
terminals electrically connected to the positive electrode respectively negative electrode and exposed to an exterior of the battery; and
current collecting plates electrically connecting the electrodes and the terminals.

At least one of the current collector plates is being welded to at least one curved end section of a side surface of the electrode assembly.

The current collecting plate has a protrusion that protrudes toward the side surface of the electrode assembly. The protrusion may be in a semicircle shape. The protrusion may further have a plurality of welding lines, each of the welding lines being elongated in a radial direction. The current collecting plate further comprises an indentation opposite and corresponding to the protrusion, and a lead member electrically connecting one of the terminals and the lead member has a lead protrusion fitting in the indentation of the current collecting plate.

According to another preferred embodiment, the current collecting plate has a plurality of protrusions, each of the protrusions protruding toward the side surface of the electrode assembly and being elongated in a radial direction.

Preferably, an end of the current collecting plate is rounded.

The rechargeable battery maybe a lithium secondary battery.

### BRIEF DESCRIPTION OF THE DRAWINGS

FIG. 1 is a perspective view of a rechargeable battery according to a first exemplary embodiment of the present invention.
FIG. 2 is a cross-sectional view of FIG. 1, taken along the line II-II.
FIG. 3 is an exploded perspective view of an electrode assembly and a current collecting plate according to the first exemplary embodiment of the present invention.
FIG. 4 is a side view of the current collecting plate welded to the electrode assembly according to the first exemplary embodiment of the present invention.
FIG. 5 is an exploded perspective view of the current collecting plate and a lead member according to the first exemplary embodiment of the present invention.
FIG. 6 is a cut-away perspective view of a current collecting plate and a lead member according to a second exemplary embodiment of the present invention.

### DETAILED DESCRIPTION

Hereinafter, embodiments of the present invention will be described with reference to the accompanying drawings so that those skilled in the art are able to implement it. The same reference numbers are used throughout the specification and drawings to refer to the same or like parts.

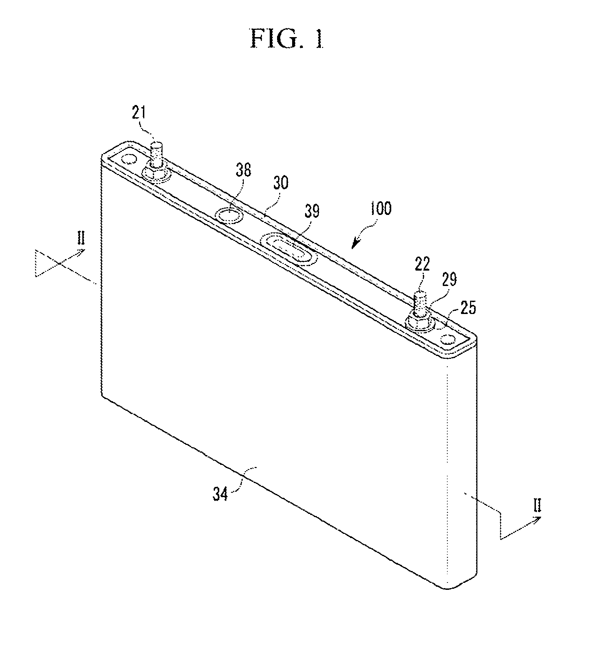

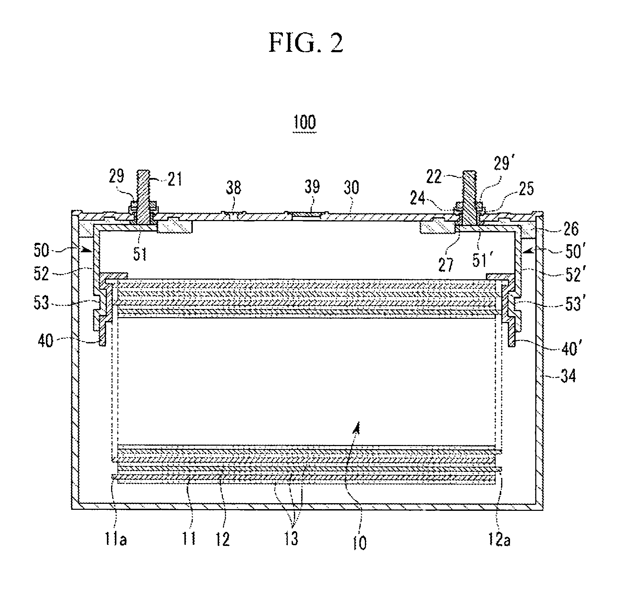

FIG. 1 is a perspective view of a rechargeable battery according to a first exemplary embodiment of the present invention and FIG. 2 is a cross-sectional view of FIG. 1, taken along the line II-II.

Referring to FIG. 1 and FIG. 2, a rechargeable battery 100 according to the first exemplary embodiment includes an electrode assembly 10 wound by placing an insulated separator 13 between a positive electrode 11 and a negative electrode 12, a case 34 to which the electrode assembly 10 is installed, a positive electrode terminal 21 electrically connected to the electrode assembly 10, a negative electrode terminal 22, and a cap plate 30 combined to an opening of the case 34. In some embodiments of the invention, the positive electrode 11 may be referred to as a first electrode or a second electrode and the negative electrode 12 may be referred to as the other of a first electrode or a second electrode. The rechargeable battery 100 according to the first exemplary embodiment is a square-shaped lithium-ion rechargeable battery.

The positive electrode 11 and the negative electrode 12 have bodies formed of a thin plate of metal foil and include coated regions, where an active material is coated, and uncoated regions 11 a and 12a, where the active material is not coated. Here, the positive active material may include lithium, and the rechargeable battery according to the present exemplary embodiment is a lithium ion type of rechargeable battery (lithium secondary battery).

The positive electrode uncoated region 11 a is at one end of the positive electrode 11 along a length direction of the positive electrode 11, and the negative electrode uncoated region 12a is at the other end of the negative electrode 12 along a length direction of the negative electrode 12. In addition, the separator 13, which is an insulator, is between the positive electrode 11 and the negative electrode 12. In other words, the positive electrode 11 is being arranged in the electrode assembly 10 such that at least the uncoated region 11 a protrudes from one short side of the electrode assembly thereby defining one side surface of the electrode assembly 10 having two curved end sections settled on opposite sides of the side surface. In addition, the negative electrode 12 is being arranged in the electrode assembly 10 such that at least the uncoated region 12a protrudes from the other short side of the electrode assembly 10 thereby defining the other side surface of the electrode assembly 10 having two curved end sections settled on opposite sides of the side surface.

The cap plate 30 is a thin plate. An electrolyte inlet for injection of electrolyte is formed in the cap plate 30 and a sealing cap 38 is installed in the electrolyte inlet once electrolyte is placed in the battery. In addition, a vent member 39, having a groove that can be broken when an internal pressure reaches a predetermined value, is provided in the cap plate 30.

An upper gasket 25 and a lower gasket 27 are provided between the cap plate 30 and the terminals 21 and 22 to insulate the cap plate 30 and the terminals 21 and 22. Here, the terminals include a positive terminal and a negative terminal. In some embodiments of the invention, the positive terminal may be referred to as the first terminal or the second terminal and the negative terminal may be referred to as the other of the first terminal or the second terminal.

The lower gasket 27 is inserted into a terminal hole, and the upper gasket 25 is provided on the cap plate 30. A washer 24 is provided on the upper gasket 25 for buffering fastening force. Nuts 29, 29' are provided in the positive electrode terminal 21 and the negative electrode terminal 22 for supporting the terminals from the top.

In the positive electrode uncoated region 11 a of the electrode assembly 10, the current collecting plate 40 is welded and electrically connected to the positive electrode terminal 21 via the lead member 50. In addition, in the negative electrode uncoated region 12a, a second current collecting plate 40' is welded and electrically connected to the negative electrode terminal 22 via the lead member 50'. An insulation member 26 is provided between each of the lead members 50, 50' and the cap plate 30. The lead members 50, 50' include a terminal lead portion 51, 51' respectively connected to one of the positive or negative electrode terminals 21 and 22, and current collecting lead portions 52, 52' attached to respective current collecting plates 40, 40'. And the lead portions 52, 52' include lead protrusions 53, 53', respectively.

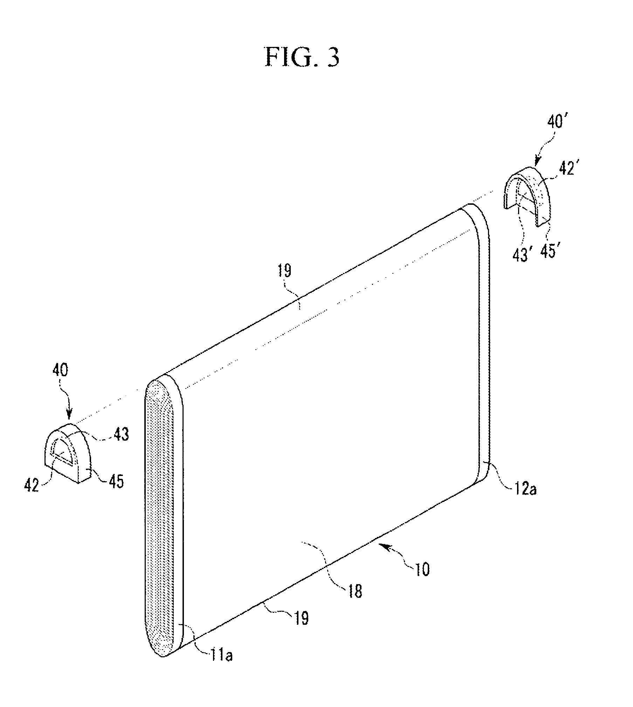

FIG. 3 is an exploded perspective view of the electrode assembly and the current collecting plate according to the first exemplary embodiment of the present invention. Referring to FIG. 3, the electrode assembly 10 according to the first exemplary embodiment is pressed to be flat in a plate shape while being wound, and accordingly, a flat portion 18, formed in a plate shape, and a curved portion 19, curved at respective ends of the flat portion 18, are formed at the longitudinal sides of the battery assembly 10. The battery assembly 10 has also two short sides each are having two curved end sections. A short side thus provides a side surface of the electrode assembly having two curved end sections settled on opposite sides of the side surface.

Each current collecting plate 40, 40' includes an indentation 42, 42' and a protrusion 43, 43', closely adhered to the curved portion of the electrode assembly 10. Each protrusion 43, 43' is then welded to a respective side of the electrode assembly 10. Supporting ribs 45, 45' protrude out from an edge of each current collecting plate 40, 40'.

In order to correspond to the curved portion 19, an upper portion of each current collecting plate 40, 40' is rounded and a side end of each current collecting plate 40, 40' is continued in a straight line from the rounded portion. Each supporting rib 45, 45' is formed along the rounded portion and the side end connected to the rounded portion. However, each supporting rib 45, 45' is not formed in a bottom portion of each current collecting plate 40, 40'. Each supporting rib 45, 45' is then adhered to an external circumferential surface of the electrode assembly 10 when the upper curved portion 19 of the electrode assembly is inserted into each current collecting plate 40, 40'. Accordingly, each supporting rib 45, 45' supports a current collecting plate 40, 40' from up, left, and right directions with respect to the electrode assembly 10 so that each current collecting plate 40, 40' can be installed in an accurate position. In addition, deterioration of contact between each current collecting plate 40, 40' and respective uncoated regions 11a and 12a due to shaking or vibration can be prevented.

The protrusions 43, 43' protruding toward the electrode assembly 10 are adhered to respective side end surfaces of the uncoated regions 11a and 12a so as to fix respective protrusions 43, 43' and the uncoated regions 11a and 12a. Laser welding is then performed while each protrusion 43, 43' is adhered to the electrode assembly 10. Here, the side end surface indicates a cross-section of the electrode assembly 10 through which the end portions of the stacked uncoated regions 11 a and 12a are exposed. The protrusions 43. 43' have an approximate semicircle shape, having a cross-section formed by a straight line that connects respective ends of an arc.

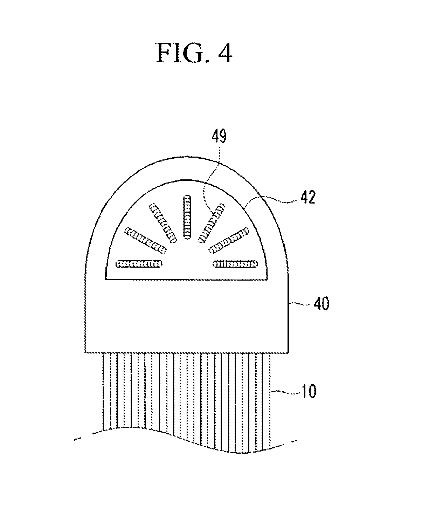

As shown in FIG. 4, the protrusion 43 is adhered to the side end surface, particularly, the curved portion 19 of the electrode assembly 10, and is fixed by laser welding. In this case, a welding line 49, formed in the indentation 42, extends in radial direction that is perpendicular to the direction of the uncoated regions 11a and 12a under the current collector 40. As described, when the welding line 49 is formed in the radial direction, each of the protrusions 43 contacts respective stacked uncoated regions 11 a and 12a so that a current can be uniformly output through the protrusions 43. This prevents excessive current from gathering in a central area.

Tension is applied to the uncoated regions 11a and 12a in the curved portion 19, thus, uncoated regions 11 a and 12a are densely packed compared to the flat portion 18. Because uncoated regions 11 a and 12a are densely packed at the curved portion, they are strong and resistant to bending there. Accordingly, when the protrusions 43 are adhered to the uncoated regions 11 a and 12a, deterioration of adhesion due to bending of the uncoated regions 11 a and 12a can be prevented. While the protrusions 43 are adhered to the uncoated regions 11 a and 12a, the uncoated regions 11 a and 12a and the protrusions 43 are stably fixed by laser welding.

At the flat portion 18, the uncoated regions 11a and 12a are not densely aggregated and no structure for supporting in the side direction is provided so that the uncoated regions 11 a and 12a and the current collecting plate 40 cannot be easily adhered. Particularly, in case of the lithium rechargeable battery, the uncoated regions 11 a and 12a at the flat portion 18 are too thin to sufficiently provide supporting force. Thus, if the uncoated regions 11a and 12a at the flat portion 18 were used to support a current collecting plate, a structure for the aggregation of the uncoated regions 11 a and 12a would be required. However, the addition of such an assembly in the case would unnecessarily increase the volume of the electrode assembly, decreasing the power output per unit volume.

However, according to the present exemplary embodiment, the uncoated regions 11 a and 12a at the rounded ends can sufficiently support force so that the current collecting plates 40 and the uncoated regions 11 a and 12a can be stably combined and the supporting ribs 45 can stably support the current collecting plate 40.

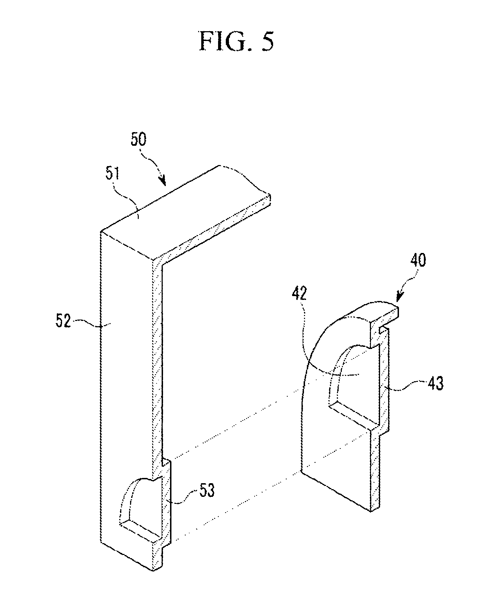

FIG. 5 is an exploded perspective view of the current collecting plate and the lead member according to the first exemplary embodiment of the present invention.

Referring to FIG. 5, the lead member 50 according to the present exemplary embodiment includes a terminal lead portion 51 connected to the terminal, a current collecting lead portion 52 attached to the lead portion 51 and the current collecting plate 40, and a lead protrusion inserted in an indentation 42 at an external side surface of the current collecting plate 40. The protrusion 43 extends toward the current collecting plate 40 so that the indentation 42 is formed at an opposite side of the protrusion 43.

The lead protrusion 53 is approximately a semicircle shape corresponding to the indentation 42, and is welded to the indentation 42 while the lead protrusion 53 is inserted in the indentation 42.

As described, when the lead protrusion 53 is combined with the indentation 42 of the current collecting plate 40 by being inserted therein, contact deterioration of the lead member 50 and the current collecting plate 40 due to external vibration or impact can be prevented.

With the above-described structure, a current collected at the uncoated regions 11 a and 12a can be transmitted to the terminals 21 and 22 through the current collecting plates 40 and the lead members 50.

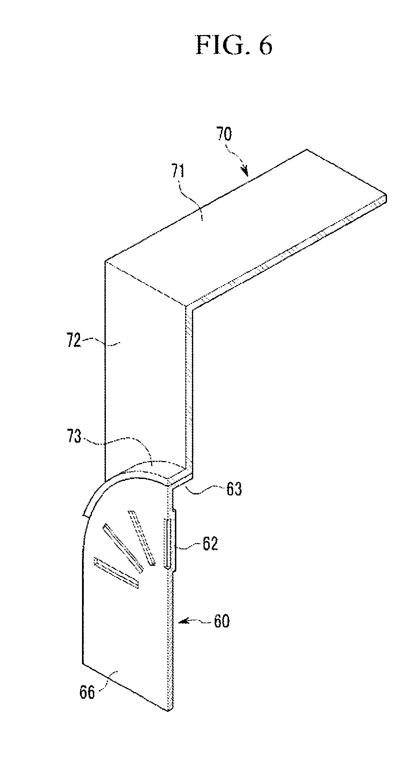

FIG. 6 is a cut-away perspective view of a current collecting plate and a lead member of a rechargeable battery according to a second exemplary embodiment of the present invention.

Referring to FIG. 6, a rechargeable battery according to the second exemplary embodiment of the present invention has the same structure as that of the rechargeable battery according to the first exemplary embodiment except for the structures of a current collecting plate 60 and a lead member 70. Description of the structures which are the same will be omitted.

A current collecting plate 60 according to the present exemplary embodiment includes a plate portion 66 adhered to a side surface of an electrode assembly 10, and a supporting rib 63 extending from the side and upper ends of the plate portion 66.

An upper portion of the plate portion 66 is rounded. A plurality of protrusions 62 are elongated in a radial direction and formed consecutively along a periphery at the upper portion of the plate portion 66. The upper portion of the plate portion 66 is adhered to the curved portion 19 of the electrode assembly 10. The supporting rib 63 is adhered to an external circumference of the curved portion 19 to support the current collecting plate 60.

Each of the protrusions 62 is in a radial direction, and is perpendicular to the respective uncoated regions 11a or 12a under the current collecting plate. While each of the current collecting plates 60 are disposed adjacent to respective uncoated regions 11a and 12a, each of the current collecting plates 60 and respective uncoated regions 11a and 12a are welded by irradiating a laser the length direction of the protrusions 62.

In other words, in this case, the protrusion 62 presses respective uncoated regions 11 a or 12a to maintain surface contact with the underlying uncoated regions 11 a or 12a, and each current collecting plate 60 is welded to respective uncoated regions 11 a or 12a by irradiating a laser along the length of the protrusions 62.

A lead member 70, welded to the current collecting plate 60, includes a terminal lead portion 71 connected to a terminal, a current collecting lead portion 72 attached to the current collecting plate 60, and a welding rib 73 formed in a lower portion of the current collecting lead portion 72 and attached to the supporting rib 63.

The welding rib 73 has an arc-shaped cross-section, and the shape of the welding rib 73 corresponds to a shape of an upper portion of the supporting rib 63. Accordingly, the welding rib 73 may be adhered to the top side of the supporting rib 63, and the welding rib 73 and the supporting rib 63 may be welded.

As described, a current path has the shortest distance when the welding rib 73 is joined to the upper end of the supporting rib 63 so that power loss and heat generation can be minimized.

Since current has a characteristic of traveling the shortest distance, the current moves through the shortest distance between the terminal and the uncoated regions. As in the present exemplary embodiment, the current collecting plate 60 is fixed on the upper ends of the uncoated regions 11a and 12a, and the lead member 70 is fixed to the supporting rib 63 at the upper end of the current collecting plate 60 so that the current can move without passing through unnecessary portions. When the distance the current travels is reduced, power loss due to specific resistance of the members can be reduced or minimized and heat generation can be reduced.

In addition, since the welding rib 73 is in contact with the supporting rib 63 over an arc shape, movement to the side direction is mechanically prevented, thus preventing contact deterioration due to vibration in the side direction.

## Claims

1. A rechargeable battery (100) comprising:
an electrode assembly (10) including a positive electrode (11), a negative electrode (12) and a separator (13) interposed between these electrodes (11, 12), the electrodes (11, 12) and the separator (13) being wound around each other thereby forming longitudinal sides having flat portions (18) and curved portions (19),
wherein the positive electrode (11) includes an uncoated region (11 a) at one end of the positive electrode (11) and the positive electrode (11) is being arranged in the electrode assembly (10) such that at least the uncoated region (11a) protrudes from one short side of the electrode assembly (10) thereby defining one side surface of the electrode assembly (10) having two curved end sections settled on opposite sides of the side surface, and
the negative electrode (12) includes an uncoated region (12a) at one end of the negative electrode (12) opposite the uncoated region (11a) of the positive electrode (11) and the negative electrode (12) is being arranged in the electrode assembly (10) such that at least the uncoated region (12a) protrudes from the other short side of the electrode assembly (10) thereby defining the other side surface of the electrode assembly (10) having two curved end sections settled on opposite sides of the side surface;
a case (34) containing the electrode assembly (10);
a cap plate (30) coupled to the case (34);
terminals (21, 22) electrically connected to the positive electrode (11) respectively negative electrode (12) and exposed to an exterior of the battery (100); and
current collecting plates (40, 60, 80) electrically connecting the electrodes (11, 12) and the terminals (21, 22),
wherein at least one of the current collector plates (40, 60, 80) is being welded to at least one curved end section of a side surface of the electrode assembly (10) **characterized in that**
the current collecting plate (40) has an indentation (42) opposite and corresponding to a protrusion (43) that protrudes toward the side surface of the electrode assembly (10), and a lead member (50) electrically connecting one of the terminals (21, 22) and the lead member (50) has a lead protrusion (53) fitting in the indentation (42) of the current collecting plate (40).

2. The rechargeable battery of claim 1, wherein the protrusion (43) is in a semicircle shape.

3. The rechargeable battery of claims 1 or 2, wherein the protrusion (43) has a plurality of welding lines (49), each of the welding lines (49) being elongated in a radial direction.

4. The rechargeable battery of claim 1, wherein the current collecting plate (60) has a plurality of protrusions (62), each of the protrusions (62) protruding toward the side surface of the electrode assembly (10) and being elongated in a radial direction.

5. The rechargeable battery of any one of the preceding claims, wherein an end of the current collecting plate (40, 60) is rounded.

6. The rechargeable battery of any one of the preceding claims, wherein the rechargeable battery is a lithium secondary battery.

## Patentansprüche

1. Akku (100), aufweisend:
eine Elektrodenanordnung (10), die eine positive Elektrode (11), eine negative Elektrode (12) und einen zwischen diese Elektroden (11, 12) eingefügten Separator (13) aufweist, wobei die Elektroden (11, 12) und der Separator (13) umeinander gewickelt sind, wodurch sie Längsseiten ausbilden, die ebene Bereiche (18) und gebogene Bereiche (19) aufweisen,
wobei die positive Elektrode (11) eine unbeschichtete Region (11a) an einem Ende der positiven Elektrode (11) aufweist und die positive Elektrode (11) derart in der Elektrodenanordnung (10) angeordnet ist, dass zumindest die unbeschichtete Region (11a) von einer kurzen Seite der Elektrodenanordnung (10) hervorragt, wodurch sie eine Seitenfläche der Elektrodenanordnung (10) definiert, die zwei gebogene Endabschnitte aufweist, die an einander gegenüberliegenden Seiten der Seitenfläche angesiedelt sind, und
wobei die negative Elektrode (12) eine unbeschichtete Region (12a) an einem Ende der negativen Elektrode (12) aufweist, die der unbeschichteten Region (11a) der positiven Elektrode (11) gegenüberliegt, und die negative Elektrode (12) derart in der Elektrodenanordnung (10) angeordnet ist, dass zumindest die unbeschichtete Region (12a) von der anderen kurzen Seite der Elektrodenanordnung (10) hervorragt, wodurch sie die andere Seitenfläche der Elektrodenanordnung (10) definiert, die zwei gebogene Endabschnitte aufweist, die auf einander gegenüberliegenden Seiten der Seitenfläche angesiedelt sind;
ein Gehäuse (34), das die Elektrodenanordnung (10) enthält;
eine Deckplatte (30), die an das Gehäuse (34) angekoppelt ist;
Anschlüsse (21, 22), die mit der positiven Elektrode (11) beziehungsweise negativen Elektrode (12) elektrisch verbunden sind und zu einer Außenseite der Batterie (100) hin freiliegen; und
Stromsammelplatten (40, 60, 80), die die Elektroden (11, 12) und die Anschlüsse (21, 22) elektrisch miteinander verbinden,
wobei zumindest eine der Stromsammelplatten (40, 60, 80) an zumindest einen gebogenen Endabschnitt einer Seitenfläche der Elektrodenanordnung (10) angeschweißt ist,
**dadurch gekennzeichnet, dass**
die Stromsammelplatte (40) eine Vertiefung (42) aufweist, die einem Vorsprung, der zur Seitenfläche der Elektrodenanordnung (10) hin hervorragt, gegenüberliegt und mit diesem korrespondiert, und ein Anschlusselement (50), das einen der Anschlüsse (21, 22) und das Anschlusselement (50) elektrisch miteinander verbindet, einen Anschlussvorsprung (53) aufweist, der in die Vertiefung (42) der Stromsammelplatte (40) hineinpasst.

2. Akku nach Anspruch 1, wobei der Vorsprung (43) eine Halbkreisform aufweist.

3. Akku nach Anspruch 1 oder 2, wobei der Vorsprung (43) eine Vielzahl von Schweißbahnen (49) aufweist, wobei jede der Schweißbahnen (49) in eine radiale Richtung verlängert ist.

4. Akku nach Anspruch 1, wobei die Stromsammelplatte (60) eine Vielzahl von Vorsprüngen (62) aufweist, wobei jeder der Vorsprünge (62) zur Seitenfläche der Elektrodenanordnung (10) hin hervorragt und in eine radiale Richtung verlängert ist.

5. Akku nach einem der vorhergehenden Ansprüche, wobei ein Ende der Stromsammelplatte (40, 60) gerundet ist.

6. Akku nach einem der vorhergehenden Ansprüche, wobei der Akku eine Lithiumsekundärbatterie ist.

## Revendications

1. Batterie rechargeable (100), comprenant :
un ensemble d'électrodes (10) comprenant une électrode positive (11), une électrode négative (12) et un séparateur (13) interposé entre ces électrodes (11, 12), les électrodes (11, 12) et le séparateur (13) étant enroulés les unes autour des autres, de façon à former ainsi des côtés longitudinaux comportant des parties plates (18) et des parties courbes (19),
dans laquelle l'électrode positive (11) comprend une région non revêtue (11a) à une extrémité de l'électrode positive (11), et l'électrode positive (11) est disposée dans l'ensemble d'électrodes (10) de telle sorte qu'au moins la région non revêtue (11a) fasse saillie à partir d'une largeur de l'ensemble d'électrodes (10), de façon à définir ainsi une surface latérale de l'ensemble d'électrodes (10) comportant deux sections d'extrémité courbes positionnées sur des côtés opposés de la surface latérale, et
l'électrode négative (12) comprend une région non revêtue (12a) à une extrémité de l'électrode négative (12) opposée à la région non revêtue (11a) de l'électrode positive (11), et l'électrode négative (12) étant disposée dans l'ensemble d'électrodes (10) de telle sorte qu'au moins la région non revêtue (12a) fasse saillie à partir de l'autre largeur de l'ensemble d'électrodes (10), de façon à définir ainsi l'autre surface latérale de l'ensemble d'électrodes (10) comportant deux sections d'extrémité courbées positionnées sur des côtés opposés de la surface latérale ;
un boîtier (34) contenant l'ensemble d'électrodes (10) ;
une plaque de capuchon (30) couplée au boîtier (34);
des bornes (21, 22) électriquement connectées à l'électrode positive (11), et, respectivement, à l'électrode négative (12) et exposées à l'extérieur de la batterie (100) ; et
des plaques de collecte de courant (40, 60, 80) connectant électriquement les électrodes (11, 12) et les bornes (21, 22),
dans laquelle au moins l'une des plaques de collecte de courant (40, 60, 80) est soudée à au moins une section d'extrémité courbe d'une surface latérale de l'ensemble d'électrodes (10), **caractérisée en ce que** :
la plaque de collecte de courant (40) comporte une indentation (42) opposée et correspondant à une saillie (43) qui fait saillie vers la surface latérale de l'ensemble d'électrodes (10), et un élément conducteur (50) connecté électriquement à l'une des bornes (21, 22), et **en ce que** l'élément conducteur (50) comporte une saillie conductrice (53) s'adaptant dans l'indentation (42) de la plaque de collecte de courant (40).

2. Batterie rechargeable selon la revendication 1, dans laquelle la saillie (43) se présente sous une forme de demi-cercle.

3. Batterie rechargeable selon les revendications 1 ou 2, dans laquelle la saillie (43) comporte une pluralité de lignes de soudage (49), chacune des lignes de soudage (49) étant allongée dans une direction radiale.

4. Batterie rechargeable selon la revendication 1, dans laquelle la plaque de collecte de courant (60) comporte une pluralité de saillies (62), chacune des saillies (62) faisant saillie vers la surface latérale de l'ensemble d'électrodes (10) et étant allongée dans une direction radiale.

5. Batterie rechargeable selon l'une quelconque des revendications précédentes, dans laquelle une extrémité de la plaque de collecte de courant (40, 60) est arrondie.

6. Batterie rechargeable selon l'une quelconque des revendications précédentes, dans laquelle la batterie rechargeable est une batterie secondaire au lithium.
